Europäisches Patentamt

(19) European Patent Office

Office européen des brevets

(11) Publication number: **0 135 329**
**A1**

## (12) EUROPEAN PATENT APPLICATION

(21) Application number: **84305288.7**

(22) Date of filing: **03.08.84**

(51) Int. Cl.⁴: **B 65 G 47/90**
**B 22 D 31/00**

(30) Priority: **04.08.83 GB 8321017**

(43) Date of publication of application:
**27.03.85 Bulletin 85/13**

(84) Designated Contracting States:
**DE FR GB IT NL SE**

(71) Applicant: **ULTRASEAL INTERNATIONAL LIMITED**
**Unit 4, Braye Road Industrial Estate Braye Road, Vale**
**Guernsey, Channel Islands(GB)**

(72) Inventor: **Young, Peter David**
**Les Blicqs St. Andrews**
**Guernsey Channel Islands(GB)**

(74) Representative: **Thomas, Roger Tamlyn et al,**
**D. Young & Co. 10 Staple Inn**
**London WC1V 7RD(GB)**

(54) **Article-handling apparatus.**

(57) The invention provides an apparatus for moving an article around an axis and longitudinally of the axis, comprising a rotatable threaded shaft (11) on the axis, a nut member (17) on the threaded shaft and capable of angular movement about the shaft, a projection (19) extending outwardly from the nut member for carrying the article, means (12) for rotating the shaft to move the nut member and the projection longitudinally of the shaft, and means (13) for controlling the angular movement of the nut member and the projection. In one embodiment the control means comprises a control member (5) rotatable about said axis and having a longitudinally guide slot through which said projection passes, and drive means (13) for said control member.

EP 0 135 329 A1

FIG. 1

0135329

## Article-Handling Apparatus

This invention relates to article-handling apparatus. It has been particulary developed for handling metal baskets containing, for example, metal castings to be impregnated in accordance with U.K. Patent Specification No. 2072231. However, the apparatus has other applications.

The invention provides apparatus for moving an article around an axis and longitudinally of the axis, comprising a rotatable threaded shaft on the axis, a nut member on the threaded shaft and capable of angular movement about the shaft, a projection extending outwardly from the nut member for carrying the article, means for rotating the shaft to move the nut member and the projection longitudinally of the shaft, and means for controlling the angular movement of the nut member and the projection, and means for rotating the guide channel. Preferably, a guide and support channel for the projection is provided by a slot in a cylinder disposed around the shaft, the cylinder being coaxially rotatably mounted with respect to the shaft.

In one form of the invention, the shaft and the guide channel are independently rotatable by separate drive means e.g. electric motors, to provide longitudinal and angular motion respectively. Operation of the drive means can be controlled by limit switches which sense rotary movement of the guide channel and longitudinal movement of the arm. However, alternatively, the drive means could be provided with revolution counters and the power supply for the drive means could be programmed to provide the desired sequence of motions.

Preferably the axis is vertical and the projection or arm is first raised to hook onto a basket, then rotated through about 180°, then lowered to deposit the basket at a different level, and then returned to its starting position.

In an alternative arrangement, the projection or more usually one or more rollers thereon, follows fixed vertical rails and inclined ramps extending at least partly around the shaft. Using a suitable arrangement of rails and ramps (possibly with one-way gates) it is possible to effect both the desired longitudinal and the desired angular rotation of the shaft.

As hereinafter described the invention provides a simple and effective apparatus for controlled movement of an article both along and around an axis.

Embodiments of the invention will now be described by way of example with reference to the drawings in which:-

Fig. 1 is a side elevation, partly broken away, of a first embodiment of the invention;

Fig. 2 is a front view of the embodiment of Fig. 1;

Fig. 3 is a plan view of the embodiment of Fig. 1;

Fig. 4 is a more accurate detail view on a larger scale of part of Fig. 1;

Fig. 5 is a section taken on line V-V of Fig. 4;

Fig. 6 is a general view of a second embodiment of the invention;

Fig. 7 is a side view of part of a third embodiment corresponding to the lower part of Fig. 6;

Fig. 8 is a plan view of the third embodiment; and

Fig. 9 is a diagrammatic development of the rails, catches etc of the third embodiment.

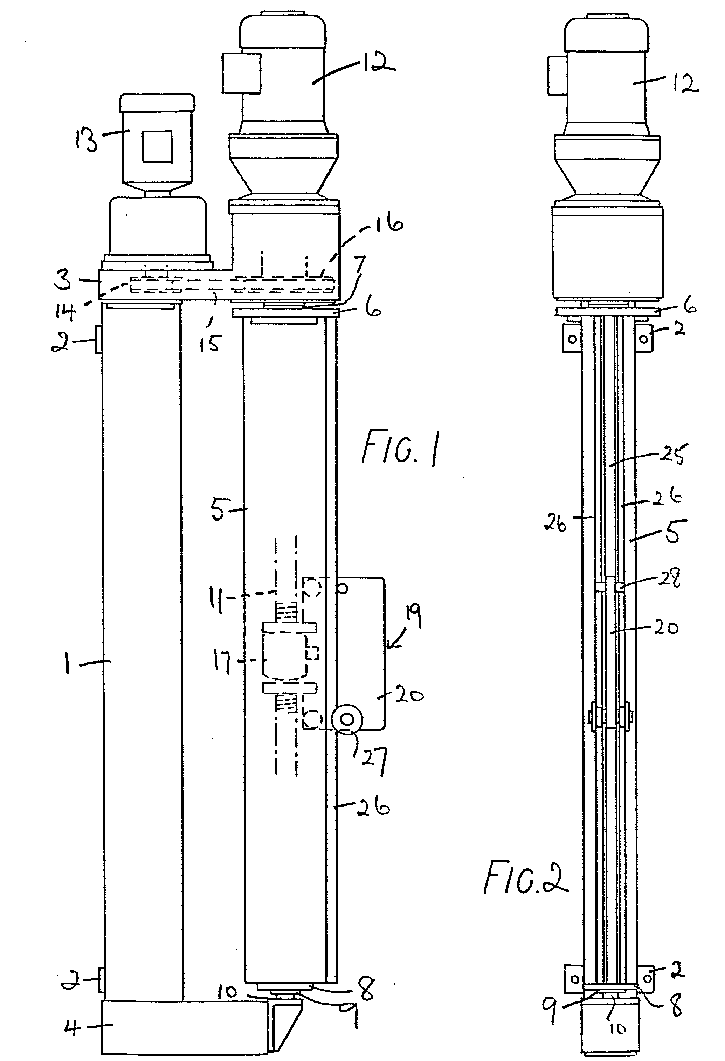

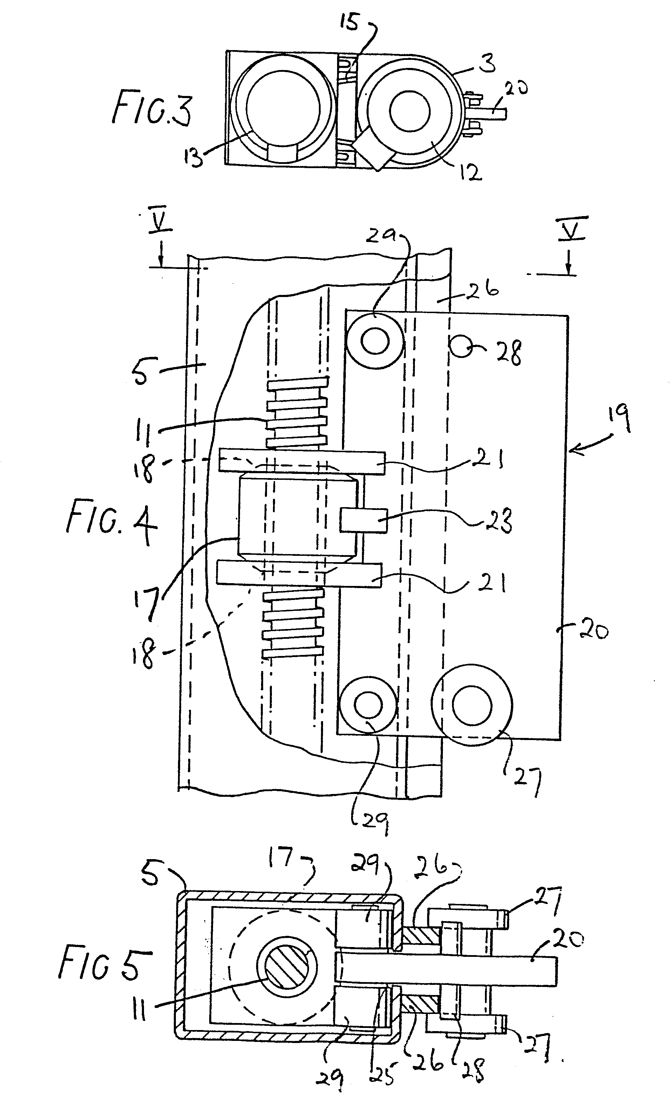

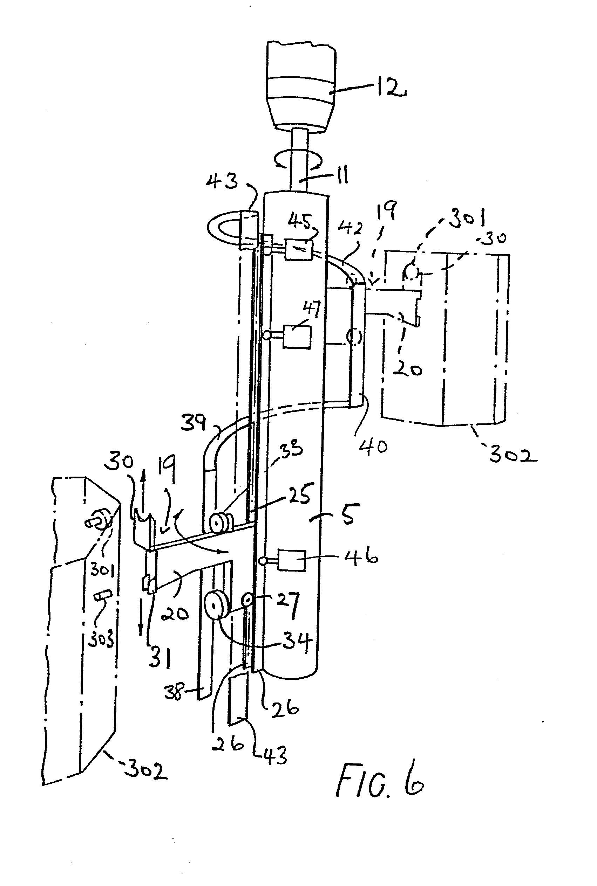

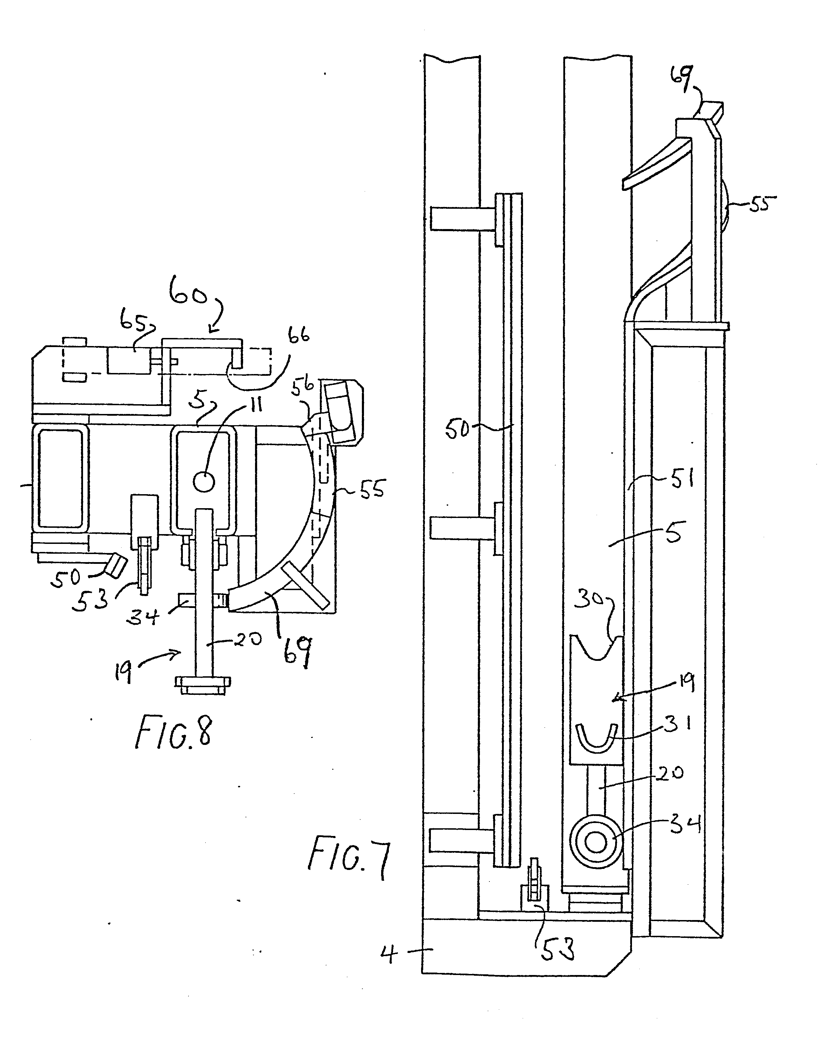

The rotary hoist shown in Figs. 1-3, comprises a mounting leg 1 suitable for mounting by flanges 2 on impregnating apparatus for metal castings. The leg 1 has horizontal brackets 3 and 4 at the top and bottom thereof, between which is rotatably mounted a rectangular cylindrical member 5. The member 5 has a top plate 6 having a hollow cylindrical spigot 7 passing through and journalled in an opening in the lower side of the bracket 3 via a bearing. A bottom plate 8 of the member 5 similarly has a hollow cylindrical spigot 9 which contains a thrust bearing in which is journalled a fixed stub shaft 10 extending upwardly from the bracket 4. A threaded shaft 11 is coaxially rotatably mounted within the member 5 in a thrust bearing in an upward extension of spigot 9 and in a bearing within the spigot 7 (not shown).

All the bearings are conveniently self aligning ball bearing assemblies of conventional type.

The upper bracket 3 carries a first electric drive motor unit 12 for the shaft 11 and a second electric drive motor unit 13 for the cylindrical member 5. The motor units are conventional in themselves and contain speed reduction gearing. The motor unit 13 has a V-belt pulley 14 connected by a V-belt 15 to a V-belt pulley 10 keyed on spigot 7. Alternatively a sprocket and chain drive arrangement could be used. The unit 13 is arranged to rotate the cylindrical member 5 through 180°, the movement being controlled, for example, by limit switches (not shown) or by a revolution counter connected to the shaft 11 (not shown).

A nut member 17 with rounded ends 18 is mounted on the shaft 11 and moves longitudinally thereof (i.e. vertically) when the shaft is rotated by the motor unit 12. An arm or projection 19 from the nut member 17 comprises a vertical plate 20 to which two apertured horizontal plates 21 are welded, the shaft 11 passing loosely through the plate 21 on each side of the nut member 17 and the plates 21 having rounded recesses corresponding to the ends 18 of the nut member 17. The nut member 17 has a pair of legs 23, one on each side of the plate 20, forming a groove in which the edge of the plate 20 loosely fits in such a way that the nut member 17 cannot rotate with respect to the shaft 11.

The cylindrical member 5 has a vertical slot 25 between a pair of rectangular outwardly projecting rails 26 and the plate 20 is a loose fit in the slot 25. The outer edge of the plate 20 will generally have a fitting for supporting an article (see Fig. 6 for example) and with the illustrated arrangement it is important that the consequent twisting movement does not jam the nut member 17. Accordingly, the lower part of the plate 20 has a pair of rollers 27 rotatable around a transverse axis and running on the rails 26, the rollers 27 being stepped to assist lateral location of the plate 20. A transverse pin 28 at the top of the plate 20 serves to steady it by engagement with the rails 26 e.g. when an article is being unloaded. The projection 19 can be arranged to operate limit switches for controlling motor unit 12. The plate 20 also has upper and lower pairs of rollers 29 which run along the inside of the member 5 adjacent the slot 25 and serve to preent twisting of the plate 20 about a horizontal axis when it is loaded.

It will thus be seen that by operation of the motor units 12 and 13 the projection 19 can be used to pick up an article, such as a basket of metal castings, transfer it through up to 180$^{\circ}$ (or more) and deposit it at a higher or lower level.

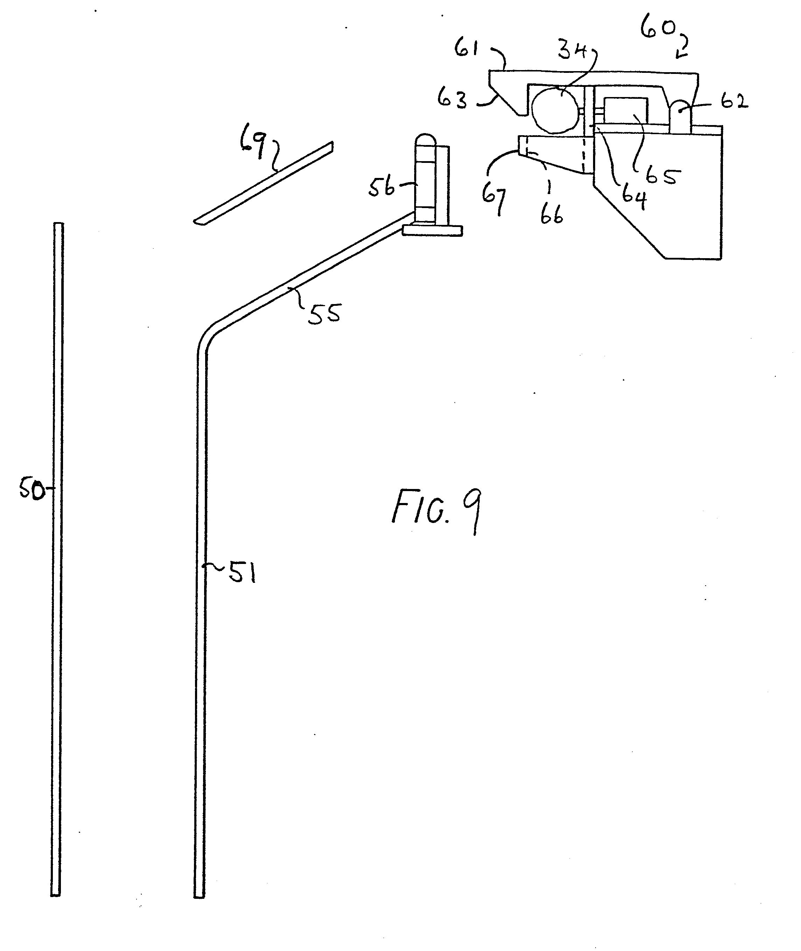

The hoist shown in Fig. 6 is similar in many ways to that of Figs. 1-5 and like numerals will be used for like parts. In this embodiment the support member 5 is circular and freely rotatable with respect to the shaft 11 and is moved by the frictional drag between the shaft 11 and the nut member 17. The projection 19 is, in this embodiment, modified as shown in Fig 6 to provide an upwardly open claw 30 which in use, hooks under a horizontal stud 301 on the side of a basket 302 of castings for use in impregnating apparatus. The projection 19 also has a channel 31 which co-operate with a pin 303 on the basket 302 to steady it, and upper and lower guide rollers 33. 34 rotatable about radial axes.

As shown the Fig. 6 hoist is arranged to lift a basket 302 from an upper roller conveyor (not shown) transfer it through about 180$^{\circ}$ and deposit it on a lower roller conveyor (not shown). The shaft 11 has a right-hand thread so rotation in a clockwise direction (viewed from above) urges the larger roller 34 against a fixed vertical rail section 38 (as shown in Fig. 6).

As the projection 19 can no longer rotate about the shaft 11 it moves vertically upwards with the roller 34 rolling along the rail section 38. The next rail section 39 is helical and extends through 180$^{\circ}$ around

the shaft 11 until it reaches a further vertical rail section 40. Rotation of the shaft 11 drives the projection upwards along rail section 39 until the roller 34 reaches rail section 40 whereupon the projection 19 moves vertically upwards once more and picks up a basket 302 as shown on the right of Fig 6 by engagement of the claw 30 behind the stud 301. The roller 33 then engages a further helical rail section 42 which again extends through approximately 180° to a full length vertical rail section 43. The rail section 42 is so sloped that the roller 33 runs along it in an anti-clockwise direction due to the upward force on the projection 19 arising from continued clockwise rotation of the shaft 11. When the projection 19 arrives at its uppermost position with the larger roller 34 adjacent the vertical rail section 43, a limit switch 45 on the member 5 is operated by the projection 19 to reverse the motor unit 12. Engagement of the roller 34 against the rail section 43 prevents rotation of the projection 19 which therefore descends and deposits the basket on the lower conveyor. Another limit switch 46 on the member 5 once again reverses the motor unit 12 when the basket 302 rests on the conveyor and the claw 30 has disengaged from the stud 301 and channel 31 has disengaged from pin 303. The projection 19 then moves clockwise a short distance until the roller 34 engages the rail section 38 and the cycle is repeated, the rail sections 38 and 43 being angularly spaced a sufficient distance (at the same radius), to permit the projection 19 to clear the stud 301 and the pin 303 on the basket 302. An intermediate limit switch 47 can be used to hold the projection 19 at the bottom of rail section 40 to await the arrival of a basket at the pick-up station. Although it would be possible to omit the rail section 42 and to reverse the motor unit 12 when the projection 19 is in the position shown at the right of Fig. 6, the basket 302 is heavy and controlled rotation from rail section 40 to rail section 43 is necessary for this particular application. Accordingly engagement of the roller 33 with the rail section 42 provides this control and prevents the projection 19 swinging round and striking the rail section 43.

The embodiment of Figs. 7-9 is similar to the embodiment of Fig. 6 but the rail arrangement controlling the rotary positions of the projection 19 is different and is designed to lift a basket from a lower conveyor, transfer it through 180° and deposit it on an upper conveyor. In this embodiment, the shaft 11 has a left-hand thread and there are two angularly spaced fixed vertical rail sections 50, 51 corresponding to rail sections 38, 43 of Fig. 6. However, owing to the left-hand thread the projection 19 ascends along the rail section 51 and descends along the rail section 50.

Assuming that the projection 19 has descended the rail section 50 empty with the shaft 11 rotating clockwise, it will operate limit switch 53 and the shaft 11 will then rotate anti-clockwise so moving the roller 34 against the rail section 51 and forcing the projection 19 to move upwards along rail section 51. The projection 19 thus picks up a basket from the lower conveyor with its claw 30 and groove 31 and carries it upwards. The next rail section 55 is helical and extends through just over 90° to a hinged gate 56 pivotable about a vertical axis and spring loaded to a closed position. The gate 56 is only operable to the left in Fig. 9 (downwards in Fig. 8) so that the roller 34 approaching along the rail section 55 moves upwards over the rounded top of the gate 56 and then into a latch mechanism shown generally at 60. The mechanism 60 comprises a horizontal latch arm 61 (not shown in Fig. 8) pivoted at 62 and having a sloped leading face 63 for engaging the roller 34 as it leaves the gate 56. The roller 34 thus lifts the latch arm 61 to arrive at its final rotary position shown in Fig. 6, where it operates limit switch 65 to reverse the motor unit 12. Because the latch arm 61 has dropped back (or has been spring-urged back) to its illustrated position against the stop 64 and behind the roller 34, the roller 34 cannot move clockwise and accordingly discends through a vertical groove 66 in a bracket 67 of the latch mechanism 60. This vertical descending movement deposits the basket on the upper conveyor and permits the claw 30 and groove 31 to disengage from it. When the roller 34 clears the groove 66, it is free to move clockwise through the gate 56 until it reaches a further helical rail section 69. The roller 34 then rolls down the underside of the rail section 69 and then across the space between the rail sections 69 and 50 until it abuts rail section 50 down which it descends to the pick up position.

CLAIMS

1.    Apparatus for moving an article around an axis and longitudinally of the axis, comprising a rotatable threaded shaft on the axis, a nut member on the threaded shaft and capable of angular movement about the shaft, a projection extending outwardly from the nut member for carrying the article, means for rotating the shaft to move the nut member and the projection longitudinally of the shaft, and means for controlling the angular movement of the nut member and the projection.

2.    Apparatus according to claim 1, wherein the control means comprises a control member rotatable about said axis and having a longitudinally guide slot through which said projection passes, and drive means for said control member.

3.    Apparatus according to claim 2, wherein said control member is a cylindical member.

4.    Apparatus according to claim 2 or 3, wherein said axis is substantially vertical and a lower part of said projection bears on the outside of said control member adjacent said slot.

5.    Apparatus according to claim 4, wherein said lower part of said projection comprises rollers rotatable about a transverse axis and bearing on respective sides of said slot externally thereof and wherein an upper part of the projection comprises rollers rotatable about a transverse axis for engagement with the inside of the respective sides of said slot.

6.    Apparatus according to claim 1, wherein the control means comprises fixed abutments for the projection at angularly spaced positions such that the projection may be  moved between said positions by rotation  of the shaft and the friction between the nut member and the shaft, rotation of the shaft thus effecting both the angular and the longitudinal movement of the projection.

7.  Apparatus according to claim 6 wherein the abutments comprise tracks engageable by a roller carried by the projection and rotatable about an axis radial to the axis of the shaft.

8.  Apparatus according to claim 7, wherein at least one track follows a helical  path around the shaft axis to permit simultaneous angular and longitudinal movement of the projection.

9.  Apparatus according to claim 6, 7 or 8, which comprises a support member freely rotatable  about the shaft axis and having a longitudinal guide slot through which said projection passes, the shaft axis being substantially vertical and a lower part of said projection bearing on the outside of said support member adjacent said slot.

10.  Apparatus according to claim 9, wherein said lower part of said projection comprises rollers rotatable about a transverse axis and bearing on respective sides of said slot externally thereof and wherein an upper part of the projection comprises rollers rotatable about a transverse axis for engagement with the inside of the respective sides of said slot.

0135329

FIG. 1

FIG. 2

FIG.3

FIG.4

FIG 5

FIG. 6

415

0135329

FIG.8

FIG.7

5|5

0135329

FIG. 9

European Patent Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 481 499 (PIERSON) <br> * Column 3, lines 26-52; figures 1,7,8 * | 1-5 | B 65 G 47/90 <br> B 22 D 31/00 |
| X | FR-A-1 362 028 (SAMUEL) <br> * Whole document * | 1,6,8 | |
| X | GB-A- 802 506 (ROLLS-ROYCE) <br> * Page 3, lines 82-102; figures 1,1A * | 1,5 | |
| A | FR-A-2 234 968 (VERON) <br> * Page 3, lines 19-39; figure 5A * | 1,7,8 | |

--- 

TECHNICAL FIELDS SEARCHED (Int. Cl 4)

B 65 G
B 21 D
B 23 Q
B 22 D

The present search report has been drawn up for all claims

| Place of search <br> THE HAGUE | Date of completion of the search <br> 25-10-1984 | Examiner <br> OSTYN T.J.M. |
|---|---|---|